# EUROPEAN PATENT SPECIFICATION

(11) **EP 4 105 038 B1**
(45) Date of publication and mention of the grant of the patent: **31.07.2024**
(21) Application number: 22178577.7
(22) Date of filing: 13.06.2022
(51) Int. Cl.: B60C 7/24, B60B 25/04, B60C 7/14, B33Y 10/00, B33Y 80/00

(54) **NON-PNEUMATIC TIRE AND RIM ASSEMBLY**
BAUGRUPPE AUS LUFTLOSEM REIFEN UND FELGE
PNEU NON PNEUMATIQUE ET ENSEMBLE JANTE

(30) Priority: 16.06.2021 US 202163211235 P; 21.04.2022 US 202217660029
(43) Date of publication of application: 21.12.2022
(73) Proprietor: The Goodyear Tire & Rubber Company, Akron, OH 44316 (US)
(72) Inventor: YENSHO, Nathan Edward, Akron, 44321 (US); SIGLER, Wesley Glen, Baberton, 44203 (US); MYERS, Ann Elizabeth, Cuyahoga Falls, 44221 (US); BYATARAYANAPURA GOPALA, Arun Kumar, Copley, 44321 (US); BHUIYAN, Md Atiqur Rahman, Copley, 44321 (US); MILLER, Andrew James, Berlin Center, 44401 (US)
(74) Representative: Kutsch, Bernd

(56) References cited:
- WO-A1-2020/101844
- CN-U- 207 535 615
- DE-A1- 102018 127 459
- DE-A1- 102018 221 619
- JP-A- 2009 269 413
- US-A- 4 226 273
- US-A1- 2016 243 890
- US-A1- 2018 093 528
- US-A1- 2018 354 304
- US-A1- 2021 061 009

## Description

### Field of the Invention

The invention relates in general to a vehicle wheel, and more particularly to a non-pneumatic tire and rim assembly and its method of manufacturing.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non-pneumatic tire is desired that has all the features of the pneumatic tires without the drawback of the need for air inflation is desired. It is also desired to have an improved non-pneumatic tire that has longer tread life as compared to a pneumatic tire of the same size.

US 2021/0061009 A1 describes a non-pneumatic tire and wheel assembly in accordance with the preamble of claim 1.

### Summary of the Invention

The invention relates to a non-pneumatic tire and rim assembly in accordance with claim 1 and to a method in accordance with claim 11.

Dependent claims refer to preferred embodiments of the invention.

The invention provides in a preferred aspect a non-pneumatic tire and wheel assembly comprising a rim, a spoke ring structure having an inner ring that is mounted on an outer surface of the rim, wherein the inner ring has one or more retention nubs aligned for reception in complementary shaped grooves on the outer surface of the rim, wherein the spoke ring structure has a plurality of spoke members, and an outer tread ring mounted on the outer circumference of the spoke ring.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

### Brief Description of the Drawings

The invention will be described by way of example and with reference to the accompanying drawings in which:

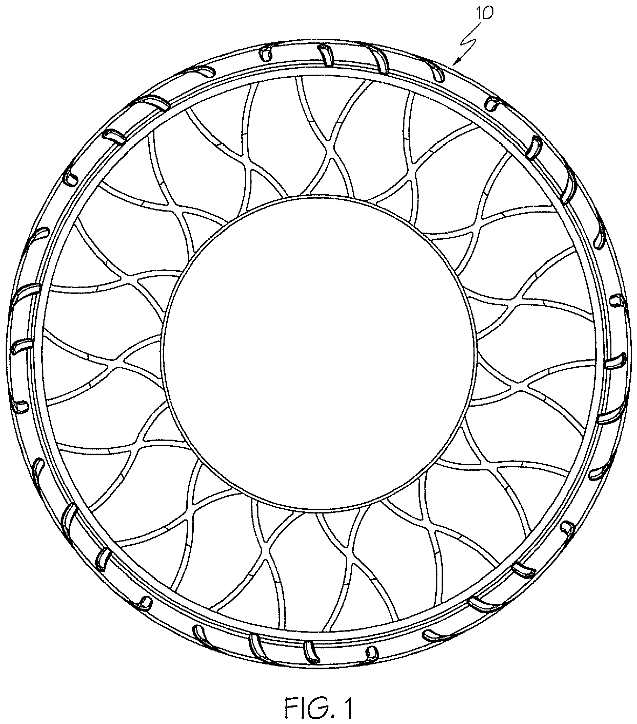

FIG. 1 is a front view of a non-pneumatic tire and rim assembly of the present invention;

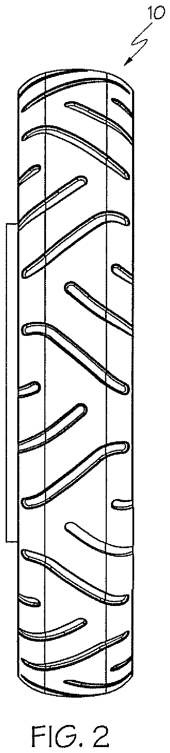

FIG. 2 is a side view of the non-pneumatic tire and rim assembly of FIG. 1;

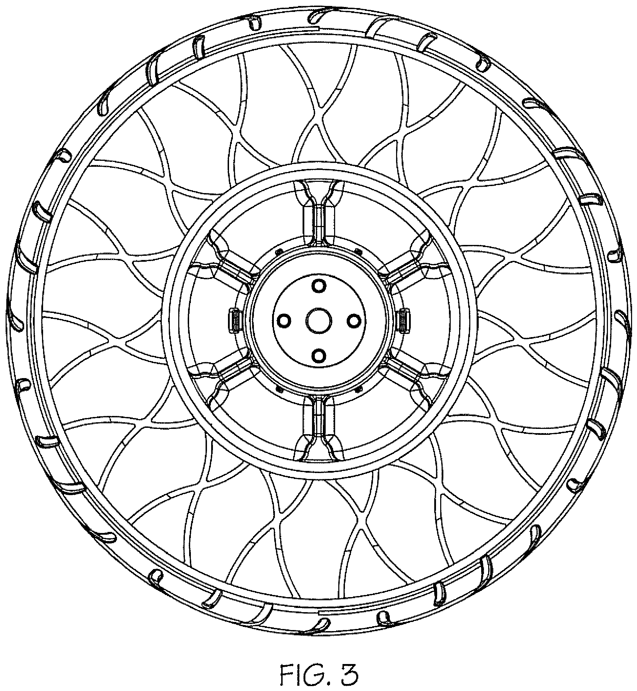

FIG. 3 is a rear view of the non-pneumatic tire and rim assembly of FIG. 1;

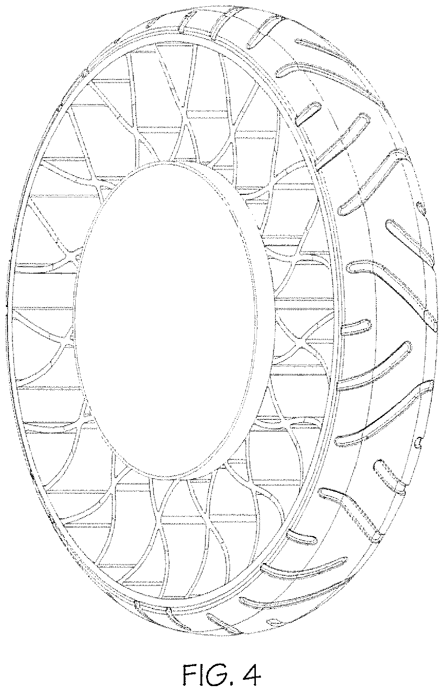

FIG. 4 is a perspective view of the non-pneumatic tire and rim assembly of FIG. 1;

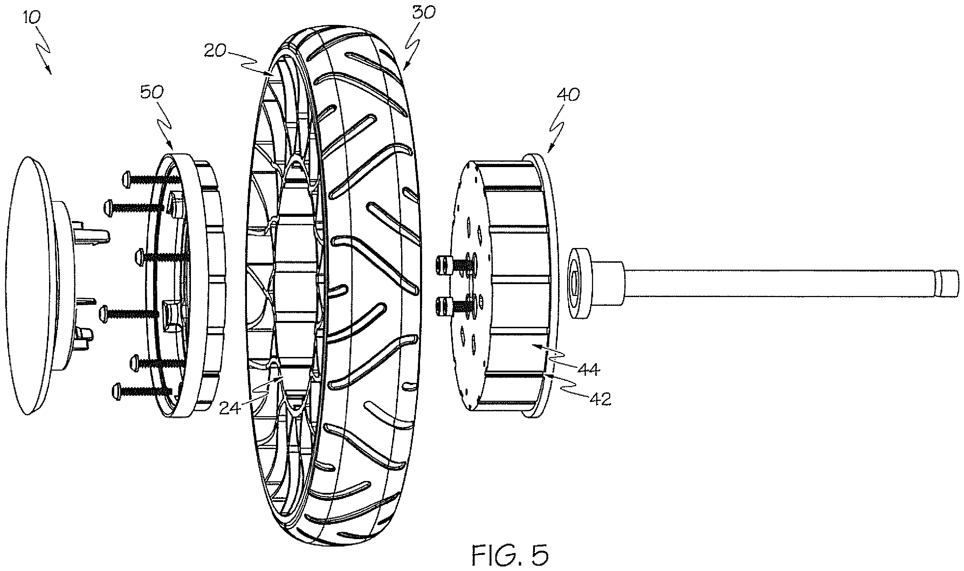

FIG. 5 is an exploded view of the non-pneumatic tire and rim assembly of FIG. 1;

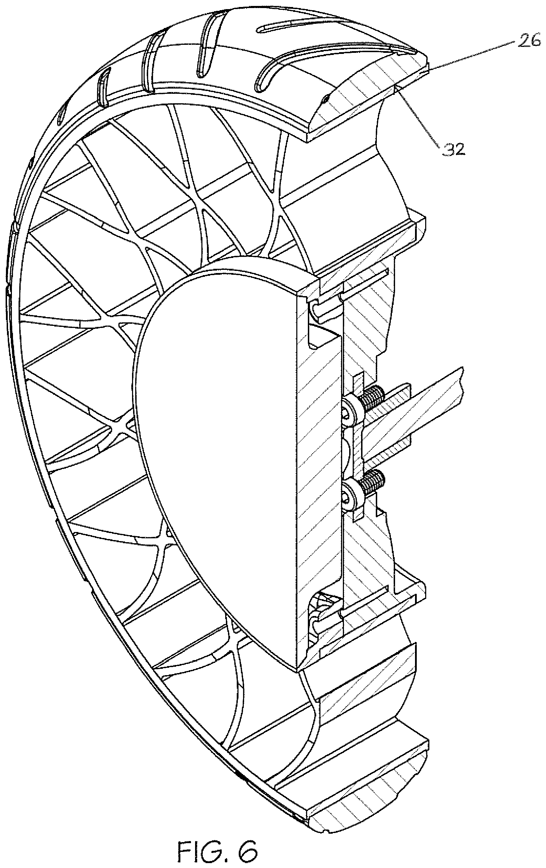

FIG. 6 is an exploded cross-sectional view of the non-pneumatic tire and rim assembly of FIG. 1;

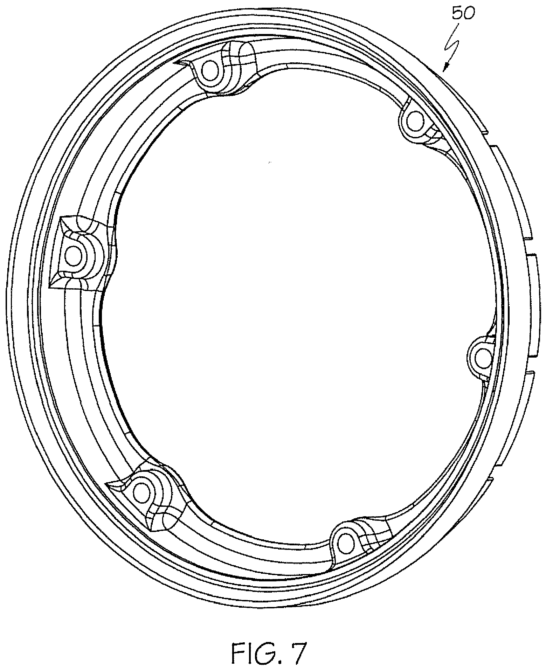

FIG. 7 is a perspective front view of the outer rim of the split rim assembly;

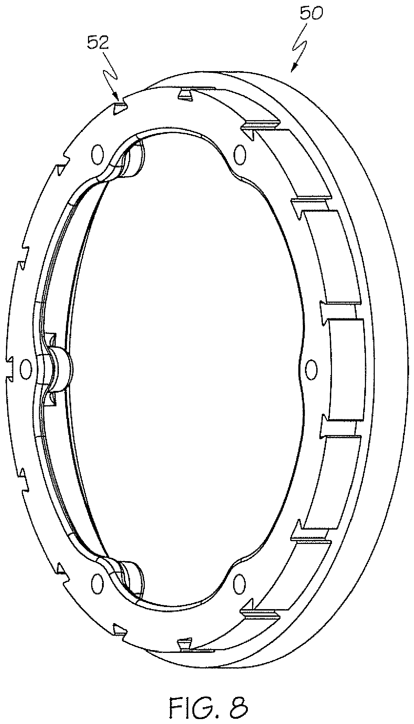

FIG. 8 is a perspective rear view of the outer rim of the split rim assembly;

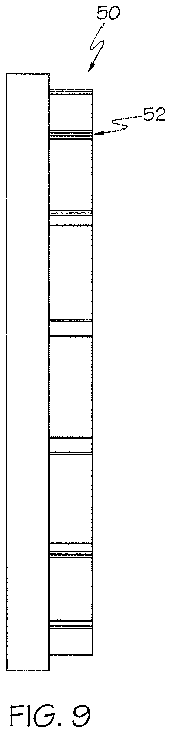

FIG. 9 is a side view of the outer rim of the split rim assembly;
FIG. 10 is a side view of inner rim of the split rim assembly;
FIG. 11 is a rear view of the inner rim of the split rim assembly;
FIG. 12 is side cross-sectional view of the inner rim of the split rim assembly;
FIG. 13 is a perspective rear view of the inner rim of the split rim assembly;
FIG. 14 is a perspective view of the metal disc;
FIG. 15 is a front view of the spoke ring structure; and
FIG. 16 is a perspective view of a micromobility vehicle with non-pneumatic tires of the present invention.

### Detailed Description of Preferred Embodiments of the Invention

Referring to the Figures, a non-pneumatic tire and rim assembly 10 of the present invention is shown. The non-pneumatic tire and rim assembly 10 includes an outer annular tread ring 30, a spoke ring structure 20, and a split rim assembly formed of an inner rim 40 mounted to a spindle, and an outer rim 50. The outer annular tread ring 30 is preferably a one-piece annular structure that is formed of a polymer, rubber or other desired elastomer. The tread ring 30 may be molded and cured as a one-piece ring, and is mounted on the outer periphery of the spoke ring. The outer tread ring 30 is preferably removable from the outer spoke ring for replacement. The outer surface of the tread ring 30 may include tread elements such as ribs, blocks, lugs, grooves, and sipes as desired in order to improve the performance of the tire in various conditions.

The tread ring 30 may further include one or more reinforcement layers, wherein the reinforcement layers comprise a plurality of parallel reinforcement cords. The reinforcement cords may be angled in the range of -40 to + 40 degrees with respect to the circumferential direction. Preferably, there are two reinforcement layers, with the first reinforcement layer angled in the range of 0 to 20 degrees, and the second reinforcement layer oriented at the same angle in the opposite direction, i.e., in the range of 0 to -20 degrees. An optional shear layer may be located between the two reinforcement layers.

### Spoke Ring Structure

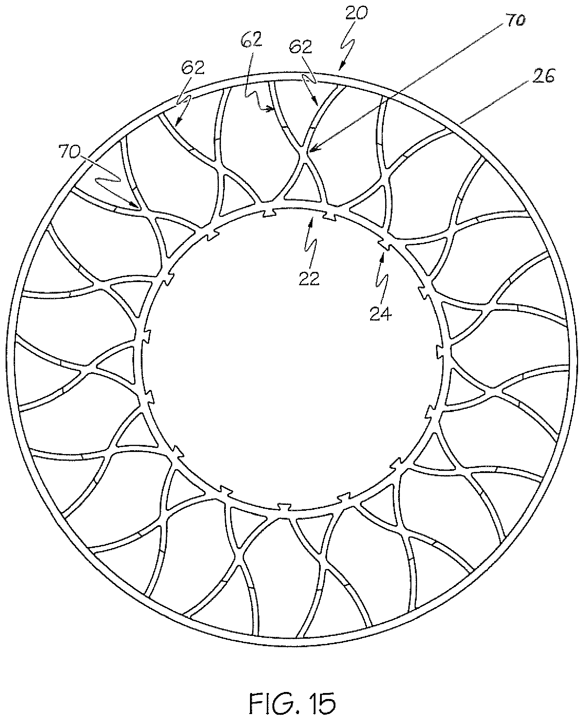

The non-pneumatic tire and rim assembly 10 further includes a spoke ring structure 20. The spoke ring structure 20 has an inner ring 22 that is mounted on the inner rim 40 of the split rim assembly. The spoke ring structure 20 has an axial width approximately the same axial width of the nonpneumatic tire assembly 10. The inner ring 22 has a plurality of retaining nubs or projections 24, as shown in FIG. 15. In this example, the nubs 24 have sidewalls which are preferably non-parallel. The nubs 24 are preferably polygonal or triangular in cross-sectional shape. However, the nubs 24 may be any desired shape, and extend in the axial direction preferably the full axial width of the spoke ring structure. To removably mount the spoke structure, the retaining nubs 24 of the inner spoke ring are aligned and mounted in complementary shaped grooves 42 of the inner rim 40.

The spoke ring structure further includes an outer ring 26 having an outer surface that is joined to the inner tread surface 32 preferably by an adhesive polymer. The spoke ring structure 20 further includes a plurality of spoke members 62 that extend between the inner ring 22 to the outer ring 26. As shown in FIG. 15, the spoke ring structure has a first spoke member 62 that extends from the inner ring 22 to the outer ring 26 at an angle. The spoke ring structure 20 includes a second spoke member 62 that also extends from the inner ring to the outer ring 26 at an angle. The first and second spoke members 62 are joined together at a junction 70 to form an X shaped spoke. The first and second spoke members 62 may be straight or curved.

The spoke ring structure 20 is preferably an integrally formed annular structure made of a resilient elastomeric material or moldable polymeric material such as natural rubber, styrene butadiene rubber, polybutadiene rubber or EPDM rubber or a blend of two or more of these rubbers which can be utilized in either injection molding or compression molding. The spoke ring structure 20 has an axial thickness equal to the axial thickness of the non-pneumatic tire. The spoke ring structure 20 has a plurality of spokes 62 that connect the inner ring 22 and the outer ring 26.

The spoke ring structure 20 is preferably formed of an elastic material, more preferably, a thermoplastic elastomer. The tensile (Young's) modulus of the spoke ring stucture 20 is preferably in the range of from 15 MPa to 100 MPa.

### The Rims

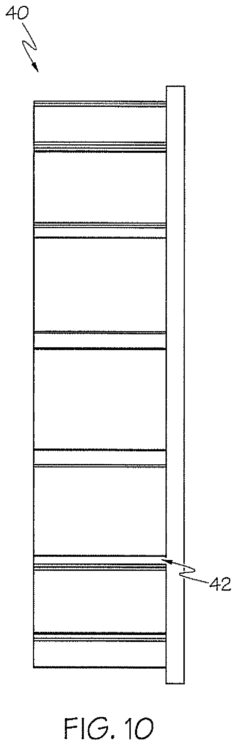

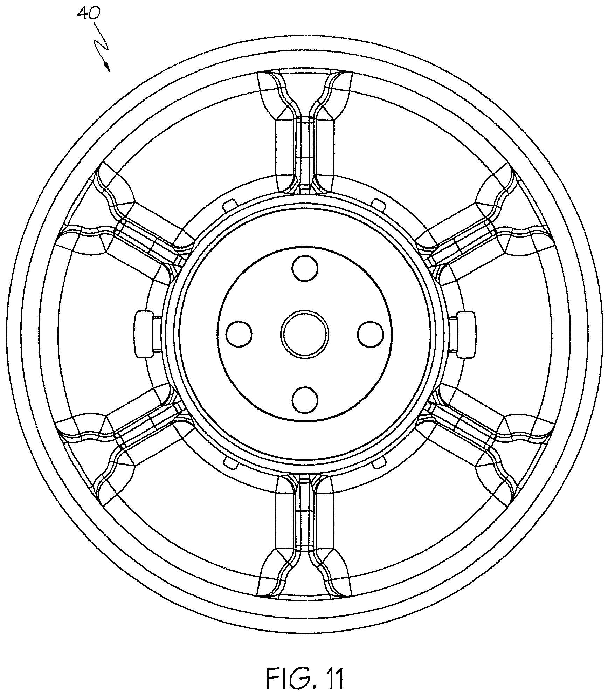

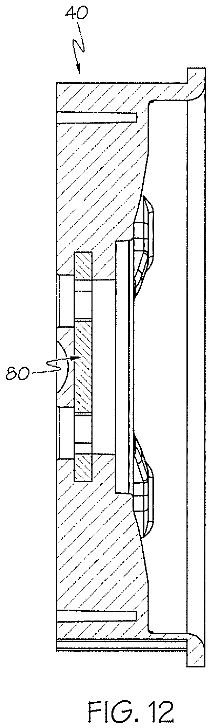

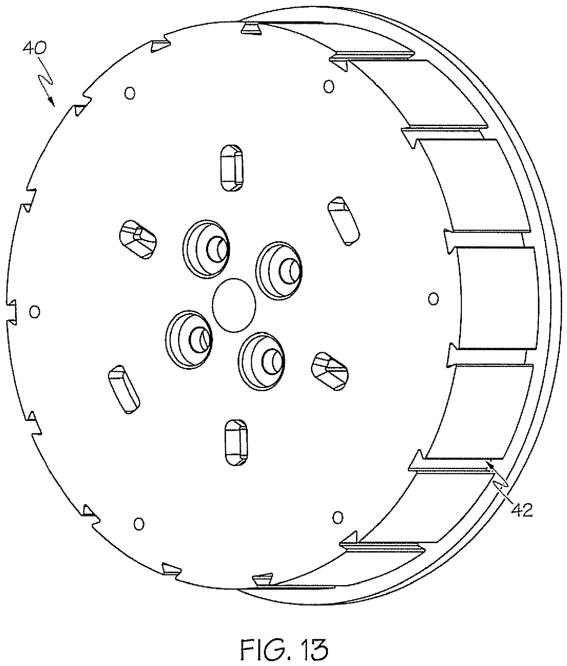

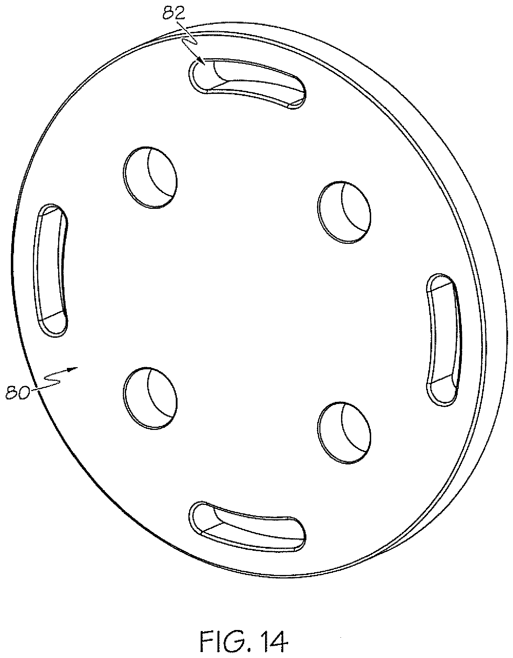

The split rim assembly is formed of an inner rim 40 that is mounted to the vehicle spindle by fasteners. The rim 40 has a tire supporting outer circumferential surface with mating grooves 42. The spoke structure 20 is then removably mounted on the inner rim 40 so that the nubs 24 are aligned and received in the mating grooves of the inner rim 40. The inner rim 40 is shown in FIGS. 10-13. The inner rim 40 has a metal disk 80 shown in FIG. 14 which is molded internal to the inner rim 40 by an overmolding process. In the overmolding process, the metal disk 80 is inserted inside the mold used to form the inner rim 40, and then the material is injection molded around the metal disk 80. The metal disk 80 reinforces the inner rim 40, which is a plastic rim, to prevent cracking. The metal disk 80 preferably includes one or more slots 82 located on the metal disk 80 which help secure the disk 80 within the rim 40 due to the injection molding of the plastic which will be received within the slots 82 to form an interlock. The rim 40 is preferably of a substantially rigid material such as a rigid plastic with glass fiber reinforcement. In one example, the rim material may be nylon 6,6.

The split rim assembly further includes an outer rim 50. The outer rim 50 has an outer surface having a plurality of complementary shaped grooves 52 that mate with the nubs or projections of the spoke ring structure 20. The outer rim 50 secures to the inner rim 40 via fasteners.

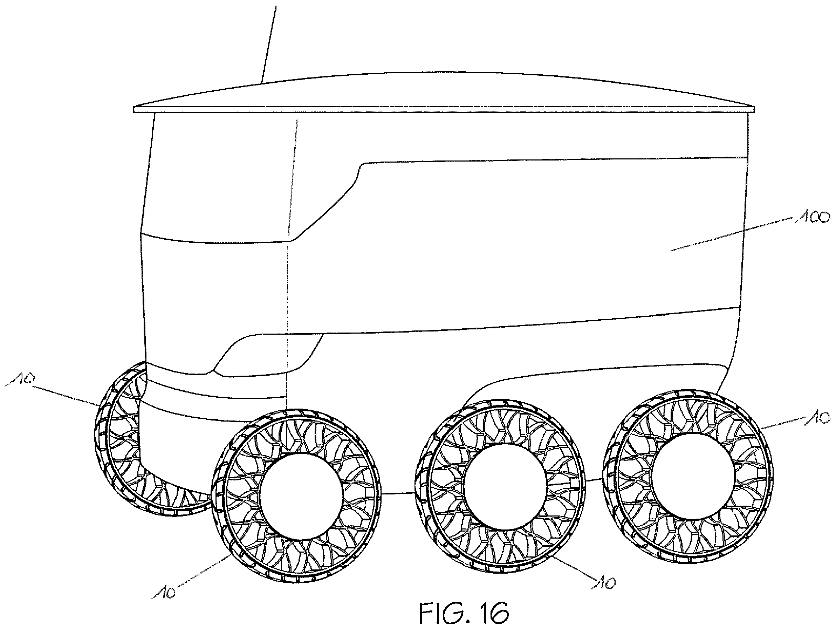

In one example, the tire and rim assembly 10 of the present invention is provided on a mobile delivery vehicle 100 as shown in FIG. 16. The mobile delivery vehicle 100 has at least three, preferably four or six or more non-pneumatic tire and rim assemblies 10 of the present invention, and more particularly, six non-pneumatic tire and rim assemblies 10. The tire and rim assembly 10 has an outer rubber tread and a spoke ring structure 20 that is preferably injection molded and formed of a thermoplastic or polyurethane material having a tensile modulus in a range of from 10 to 100 MPA. The spoke ring structure 20 may also be three dimensionally printed. The non-pneumatic tire and rim assembly 10 of the present invention preferably has a spring rate in the range of 43 to 53 N/mm. The non-pneumatic tire and rim assembly 10 of the present invention preferably an axial width of 35 to 40 mm such as about 37.5 mm with preferably 15 to 24 X-shaped spokes 62 each preferably having a radial height in the range of from 25.4 to 50.8 mm.

While the non-pneumatic tire and wheel assembly is described as having X-shaped spokes, other spoke designs could be used. The outer rim 50 preferably has an outer diameter of 100 to 150 mm such as 127 mm but could be sized to be smaller in the outer diameter to provide a greater radial height of the spoke ring structure 20. The weight of the tire and rim assembly 10 is preferably 250 to 750 grams such as about 500 grams and is preferably designed for a tread life of 20000 km or 30000 km or more.

## Claims

1. A non-pneumatic tire and wheel assembly (10) comprising an axially inner rim (40) and an axially outer rim (50) and a spoke ring structure (20) having a radially inner ring (22) that is mounted on a radially outer surface of the inner rim (40), wherein the spoke ring structure (20) has a plurality of spoke members (62), wherein a radially outer tread ring (30) is mounted on the radially outer circumference of the spoke ring structure (20), and wherein the inner rim (40) further includes a metal disk (80) located radially inside the inner rim (40), **characterized in that** the inner rim (40) is a plastic rim and the metal disk (80) is overmolded inside the inner rim (40).

2. The non-pneumatic tire and wheel assembly of claim 1 wherein the inner ring (22) has one or more retention nubs or projections (24) aligned for reception in complementary shaped grooves (42) located on the outer surface of the inner rim (40).

3. The non-pneumatic tire and wheel assembly of claim 2 wherein the retention nubs or projections (24) are polygonal in cross-section.

4. The non-pneumatic tire and wheel assembly of claim 2 wherein the retention nubs or projections are triangular in cross-section.

5. The non-pneumatic tire and wheel assembly of at least one of the previous claims wherein the spoke ring structure (20) is removably mounted on the inner rim (40).

6. The non-pneumatic tire and wheel assembly of at least one of the previous claims wherein the spoke members (62) of the spoke ring structure (20) are joined together at a junction (70) to form an X shaped spoke.

7. The non-pneumatic tire and wheel assembly of at least one of the previous claims wherein the outer rim (50) includes a plurality of mating grooves (52) for reception of the retention nubs or projections (24).

8. The non-pneumatic tire and wheel assembly of at least one of the previous claims wherein a shear ring structure is located between the tread ring (30) and the spoke ring structure (20).

9. The non-pneumatic tire and wheel assembly of at least one of the previous claims wherein the spoke ring structure (20) is formed of a polymer material having a tensile modulus in the range of from 15 to 100 MPa.

10. The non-pneumatic tire and wheel assembly of at least one of the previous claims wherein the spoke ring structure (20) is formed of a thermoplastic or polyurethane material.

11. A method of making the non-pneumatic tire and wheel assembly of at least one of the previous claims wherein the non-pneumatic tire and wheel assembly (10) or one or more parts thereof is formed by three-dimensional printing.

## Patentansprüche

1. Nicht-pneumatische Reifen- und Radbaugruppe (10), die eine axial innere Felge (40) und eine axial äußere Felge (50) und eine Speichenringstruktur (20), die einen radial inneren Ring (22) aufweist, der an einer radial äußeren Oberfläche der inneren Felge (40) angebracht ist, umfasst, wobei die Speichenringstruktur (20) eine Vielzahl von Speichenelementen (62) aufweist, wobei ein radial äußerer Laufflächenring (30) an dem radial äußeren Umfang der Speichenringstruktur (20) angebracht ist, und wobei die innere Felge (40) ferner eine Metallscheibe (80) umfasst, die radial innerhalb der inneren Felge (40) angeordnet ist, **dadurch gekennzeichnet, dass** die innere Felge (40) eine Kunststofffelge ist und die Metallscheibe (80) innerhalb der inneren Felge (40) umspritzt ist.

2. Nicht-pneumatische Reifen- und Radbaugruppe nach Anspruch 1, wobei der innere Ring (22) einen oder mehrere Rückhaltenoppen oder Vorsprünge (24) aufweist, die zur Aufnahme in komplementär geformten Rillen (42) ausgerichtet sind, die sich auf der Außenfläche der inneren Felge (40) befinden.

3. Nicht-pneumatische Reifen- und Radbaugruppe nach Anspruch 2, bei der die Rückhaltenoppen oder -vorsprünge (24) einen polygonalen Querschnitt aufweisen.

4. Nicht-pneumatische Reifen- und Radbaugruppe nach Anspruch 2, wobei die Rückhaltenoppen oder -vorsprünge einen dreieckigen Querschnitt aufweisen.

5. Nicht-pneumatische Reifen- und Radbaugruppe nach mindestens einem der vorhergehenden Ansprüche, wobei die Speichenringstruktur (20) abnehmbar an der inneren Felge (40) angebracht ist.

6. Nicht-pneumatische Reifen- und Radbaugruppe nach mindestens einem der vorhergehenden Ansprüche, wobei die Speichenelemente (62) der Speichenringstruktur (20) an einer Verbindungsstelle (70) miteinander verbunden sind, um eine X-förmige Speiche zu bilden.

7. Nicht-pneumatische Reifen- und Radbaugruppe nach mindestens einem der vorhergehenden Ansprüche, wobei die äußere Felge (50) eine Vielzahl von zusammenpassenden Rillen (52) zur Aufnahme der Rückhaltenoppen oder Vorsprünge (24) aufweist.

8. Nicht-pneumatische Reifen- und Radbaugruppe nach mindestens einem der vorhergehenden Ansprüche, wobei eine Scherringstruktur zwischen dem Laufflächenring (30) und der Speichenringstruktur (20) angeordnet ist.

9. Nicht-pneumatische Reifen- und Radbaugruppe nach mindestens einem der vorhergehenden Ansprüche, wobei die Speichenringstruktur (20) aus einem Polymermaterial mit einem Zugelastizitätsmodul im Bereich von 15 bis 100 MPa gebildet ist.

10. Nicht-pneumatische Reifen- und Radbaugruppe nach mindestens einem der vorhergehenden Ansprüche, wobei die Speichenringstruktur (20) aus einem thermoplastischen oder Polyurethanmaterial gebildet ist.

11. Verfahren zur Herstellung der nicht-pneumatischen Reifen- und Radbaugruppe nach mindestens einem der vorhergehenden Ansprüche, wobei die nicht-pneumatische Reifen- und Radbaugruppe (10) oder ein oder mehrere Teile davon durch dreidimensionales Drucken gebildet werden.

## Revendications

1. Assemblage d'une roue et d'un bandage non pneumatique (10) qui comprend une jante intérieure (40), dans la direction axiale, et une jante extérieure (50), dans la direction axiale, ainsi qu'une structure en forme d'anneau à rayons (20) qui possède un anneau interne (22), dans la direction radiale, qui est monté sur une surface externe, dans la direction radiale, de la jante intérieure (40) ; dans lequel la structure en forme d'anneau à rayons (20) possède un certain nombre d'éléments (62) faisant office de rayons ; dans lequel un anneau (30) sous la forme d'une bande de roulement externe, dans la direction radiale, est monté sur la circonférence externe, dans la direction radiale, de la structure en forme d'anneau à rayons (20) ; et dans lequel la jante intérieure (40) englobe en outre un disque métallique (80) qui est disposé, dans la direction radiale, à l'intérieur de la jante intérieure (40) ; **caractérisé en ce que** la jante intérieure (40) est une jante en matière plastique et le disque métallique (80) est surmoulé à l'intérieur de la jante intérieure (40).

2. Assemblage d'une roue et d'un bandage non pneumatique selon la revendication 1, dans lequel l'anneau interne (22) possède une ou plusieurs saillies ou protubérances de rétention (24) qui sont disposées en alignement à des fins de réception dans des rainures (42) possédant une configuration de forme complémentaire, situées sur la surface externe de la jante intérieure (40).

3. Assemblage d'une roue et d'un bandage non pneumatique selon la revendication 2, dans lequel les saillies ou protubérances de rétention (24) possèdent une section transversale en forme de polygone.

4. Assemblage d'une roue et d'un bandage non pneumatique selon la revendication 2, dans lequel les saillies ou protubérances de rétention possèdent une section transversale en forme de triangle.

5. Assemblage d'une roue et d'un bandage non pneumatique selon au moins une des revendications précédentes, dans lequel la structure en forme d'anneau à rayons (20) est montée de manière amovible sur la jante intérieure (40).

6. Assemblage d'une roue et d'un bandage non pneumatique selon au moins une des revendications précédentes, dans lequel les éléments (62) faisant office de rayons de la structure en forme d'anneau à rayons (20) sont joints les uns aux autres à une jonction (70) afin d'obtenir un rayon qui possède une configuration en forme de X.

7. Assemblage d'une roue et d'un bandage non pneumatique selon au moins une des revendications précédentes, dans lequel la jante extérieure (50) englobe un certain nombre de rainures (52) possédant une forme complémentaire, qui sont destinées à la réception des saillies ou protubérances de rétention (24).

8. Assemblage d'une roue et d'un bandage non pneumatique selon au moins une des revendications précédentes, dans lequel une structure en forme d'anneau de cisaillement est située entre l'anneau (30) faisant office de bande de roulement et la structure en forme d'anneau à rayons (20).

9. Assemblage d'une roue et d'un bandage non pneumatique selon au moins une des revendications précédentes, dans lequel la structure en forme d'anneau à rayons (20) est réalisée à partir d'une matière polymère qui possède un module de traction qui se situe dans la plage allant de 15 à 100 MPa.

10. Assemblage d'une roue et d'un bandage non pneumatique selon au moins une des revendications précédentes, dans lequel la structure en forme d'anneau à rayons (20) est réalisée à partir d'une matière thermoplastique ou à base de polyuréthane.

11. Procédé de confection de l'assemblage de roue et de bandage non pneumatique selon au moins une des revendications précédentes, dans lequel l'assemblage de roue et de bandage non pneumatique (10) ou une ou plusieurs parties dudit assemblage sont réalisées par l'intermédiaire d'une impression en trois dimensions.
